# EUROPÄISCHE PATENTSCHRIFT

(11) **EP 4 311 652 B1**
(45) Veröffentlichungstag und Bekanntmachung des Hinweises auf die Patenterteilung: **03.06.2026**
(21) Anmeldenummer: 23183283.3
(22) Anmeldetag: 04.07.2023
(51) Int. Cl.: B29C 48/08, B29C 48/88

(54) **ANLEGEVORRICHTUNG, KÜHLWALZENEINHEIT SOWIE RECKANLAGE**
APPLICATION DEVICE, COOLING ROLL UNIT AND STRETCHING INSTALLATION
DISPOSITIF D'APPLICATION, UNITÉ DE CYLINDRE DE REFROIDISSEMENT AINSI QU'INSTALLATION D'ÉTIRAGE

(30) Priorität: 28.07.2022 DE 102022118971
(43) Veröffentlichungstag der Anmeldung: 31.01.2024
(73) Patentinhaber: Brückner Maschinenbau GmbH, 83313 Siegsdorf (DE)
(72) Erfinder: FUßSTETTER, Stefan, 83278 Traunstein (DE); ADLER, Florian, 83313 Siegsdorf (DE); EDFELDER, Anton, 83246 Unterwössen (DE); OEDL, Günter, 5020 Salzburg (AT); GIAPOULIS, Anthimos, 83278 Traunstein (DE); MAURER, Peter, 83101 Rohrdorf (DE); KELLNBERGER, Florian, 85567 Grafing (DE)
(74) Vertreter: Flach Bauer & Partner Patentanwälte mbB

(56) Entgegenhaltungen:
- EP-A2- 0 920 973
- DE-A1- 19 653 749
- JP-A- 2009 234 194
- JP-A- H11 188 777

## Beschreibung

Die Erfindung betrifft eine Anlegevorrichtung zum elektrostatischen Anlegen eines Films an einer Kühlwalze, eine entsprechende Kühlwalzeneinheit sowie eine Reckanlage mit einer solchen Kühlwalzeneinheit.

Beim Herstellen von dünnen Kunststofffolien wird zunächst ein Film einer Kunststoffschmelze auf eine Kühlwalze aufgebracht, auf der er abkühlt und erstarrt. Um eine homogene Abkühlung und somit homogene Materialeigenschaften zu gewährleisten, ist es notwendig, dass der Film gleichmäßig über seine gesamte Breite auf der Kühlwalze anliegt und zwar kontinuierlich über seine Länge.

Um Deformationen des Films durch mechanische Lösungen zum Anlegen zu vermeiden, ist es bekannt, mittels Elektroden ein elektrisches Feld mit hohen Feldstärken in der Nähe der Kühlwalzenoberfläche zu erzeugen, welches der Film zu durchlaufen hat. Aufgrund des elektrischen Feldes werden die polaren Moleküle des Films ausgerichtet und die Oberfläche der Kühlwalze lädt sich elektrisch auf. Es entsteht eine elektrostatische Anziehung zwischen dem Film und der Kühlwalze, sodass sich der Film gleichmäßig und selbsttätig an die Kühlwalze angelegt.

Zur Erzeugung eines solchen elektrischen Feldes mit starken Feldstärken wird jedoch eine große Hochspannung von 9 kV oder mehr an den Elektroden benötigt, sodass es zu Funkenüberschlägen zwischen den Elektroden und der Kühlwalze kommen kann. Solche Funkenüberschläge beschädigen die Oberfläche der Kühlwalze und verringern auch die Qualität des hergestellten Films.

Die JP H11-188777 offenbart eine Casting Unit mit einer Anlegevorrichtung. Die Anlegevorrichtung verwendet einen einzelnen Draht, der auf der einen Seite ab- und auf der anderen Seite aufgewickelt werden kann und mit Hochspannung beaufschlagt ist.

Die DE 196 53 749 A1 offenbart eine Casting Unit mit einer Anlegevorrichtung. Die Anlegevorrichtung hat zwei Elektroden, die als Metallbänder ausgestaltet sind. Die Elektroden sind mit der gleichen Stromquelle verbunden.

Die JP 2009-234194 A beschreibt eine Anlegevorrichtung, bei der ein vorbestimmter Zug auf den Draht sichergestellt wird.

Es ist daher Aufgabe der Erfindung, eine Anlegevorrichtung, eine Kühlwalzeneinheit sowie eine Reckanlage bereitzustellen, bei denen Funkenüberschläge verringert werden.

Die Aufgabe wird gelöst durch eine Anlegevorrichtung zum elektrostatischen Anlegen eines Films an eine Kühlwalze, mit einer ersten Spuleinheit, einer zweiten Spuleinheit, einem zwischen den Spuleinheiten liegenden Anlegebereich, einer Hochspannungsquelle sowie wenigstens zwei Elektroden, wobei zumindest die erste Elektrode der wenigstens zwei Elektroden bandförmig ist. Die Elektroden verlaufen von der ersten Spuleinheit zur zweiten Spuleinheit im Anlegebereich und die beiden Elektroden sind durch die Hochspannungsquelle mit Hochspannung beaufschlagt. Die eine, mehrere oder alle der Elektroden sind zwischen der ersten Spuleinheit und der zweiten Spuleinheit in ihrer Längsrichtung verfahrbar.

Durch die Verwendung zweier bandförmiger Elektroden, die beide mit Hochspannung beaufschlagt sind, wird ein homogenes elektrisches Feld erzeugt, das besonders hohe Feldstärken, insbesondere maximale Feldstärken, an der Stelle aufweist, an der der Film mit der Kühlwalze in Kontakt kommt. Durch diese Fokussierung des elektrischen Feldes kann die Hochspannung gegenüber anderen Lösungen reduziert werden, um gleiche Feldstärken zu erzeugen. Durch die Verringerung der Hochspannung in den Elektroden verringert sich somit auch die Überschlagsneigung, wodurch weniger Überschläge hervorgerufen bzw. Überschläge ganz vermieden werden. Zudem können Ablagerungen auf der einen, mehreren oder allen Elektroden, die die Qualität des elektrischen Feldes beeinträchtigen, abtransportiert werden.

Beispielsweise hat die Hochspannung eine Spannung zwischen 5 kV und 10 kV, insbesondere liegt sie zwischen 7 kV und 9 kV. Die Hochspannung kann sogar bis zu 20 kV betragen.

In einer Ausgestaltung ist die zweite Elektrode der wenigstens zwei Elektroden auch bandförmig oder drahtartig, insbesondere ein Draht, wodurch die Homogenität des elektrischen Feldes weiter verbessert werden kann.

In einer Ausführungsform ist eine dritte Elektrode vorgesehen, wobei die dritte Elektrode bandförmig ist oder drahtartig, insbesondere ein Draht ist. Durch die dritte Elektrode wird die Homogenität des elektrischen Feldes weiter gesteigert.

Beispielsweise verlaufen die Elektroden parallel zueinander, wodurch das elektrische Feld sehr homogen ist.

Die beiden Elektroden können jeweils zwei Seitenflächen aufweisen, wobei die Elektroden mit je einer ihrer Seitenflächen einander zugewandt sind. Auf diese Weise wird die Homogenität des elektrischen Feldes weiter erhöht.

Die Seitenflächen laufen insbesondere parallel zueinander.

In einem Aspekt haben die Elektroden im Anlegebereich einen Abstand von 3 mm bis 15 mm, insbesondere von 5 mm bis 10 mm zueinander, wodurch eine besonders gute Fokussierung des elektrischen Feldes erreicht wird.

Beispielsweise haben die Elektroden die gleiche Breite, wodurch die Homogenität des elektrischen Feldes weiter gesteigert wird. Denkbar sind auch unterschiedliche Breiten, wodurch die Lage der maximalen Feldstärken beeinflusst werden kann.

Die Breite der Elektroden kann zwischen 3 mm und 15 mm liegen, insbesondere größer oder gleich 4 mm und kleiner als 13 mm, wodurch sehr homogene elektrische Felder erreicht werden.

Um die Elektroden an die Gegebenheiten der Kühlwalzeneinheit anpassen zu können, können die Elektroden in Richtung ihrer Breite versetzt sein oder bündig angeordnet sein.

Beispielsweise entspricht die Richtung der Breite der Radialrichtung der Rolle.

In einer Ausführungsform ist in der ersten und in der zweiten Spuleinheit wenigstens eine rotierbare Spule vorgesehen, auf der die eine, mehrere oder alle der Elektroden teilweise aufgewickelt sind.

Beispielsweise ist für jede der Elektroden in jeder der Spuleinheiten eine rotierbare Spule angeordnet, auf der die entsprechende Elektrode teilweise aufgewickelt ist.

Insbesondere ist wenigstens eine der rotierbaren Spulen angetrieben.

In einer Ausgestaltung ist eine, insbesondere die zweite Elektrode, oder mehrere der Elektroden statisch, insbesondere wobei in der zweiten Spuleinheit eine mechanische Spannvorrichtung vorgesehen ist, wobei die eine oder die mehreren statischen Elektroden in der zweiten Spuleinheit an der Spannvorrichtung befestigt ist und in der ersten Spuleinheit ortsfest fixiert ist. Auf diese Weise wird die Komplexität der Anlegevorrichtung verringert.

In einer Ausführungsform ist in wenigstens einer der Spuleinheiten, insbesondere in beiden Spuleinheiten, eine Spannungszufuhreinrichtung vorgesehen, die die Elektroden mit der wenigstens einen Hochspannungsquelle elektrisch verbindet, wodurch eine zuverlässige Beaufschlagung der Elektroden mit Hochspannung gewährleistet ist.

Beispielsweise ist eine gemeinsame Hochspannungsquelle für die beiden Spuleinheiten vorgesehen oder jede Spuleinheit hat eine separate Hochspannungsquelle.

In einer Ausgestaltung weist die Spannungszufuhreinrichtung eine Rolle auf, an der die erste Elektrode geführt ist, und/oder die Spannungszufuhreinrichtung hat einen bogenförmigen Lauf, entlang dem die zweite Elektrode und/oder die dritte Elektrode geführt ist. Dies ermöglicht eine zuverlässige und platzsparende Kontaktierung der Elektroden.

Beispielsweise beschreibt eine Außenseite des Laufs einen Kreissektor.

Um unerwünschte Schwingungen der Elektroden zu verhindern, weist die zweite Spuleinheit eine Dämpfungsvorrichtung auf, die dazu eingerichtet ist, Schwingungen der Elektroden im Anlegebereich zu dämpfen.

Die Elektroden werden beispielsweise durch die Dämpfungsvorrichtung aus der entsprechenden Spuleinheit hinausgeführt.

Die zu dämpfenden Schwingungen haben insbesondere eine Amplitude senkrecht zu den Seitenflächen der Elektroden, in Richtung der Breite der Elektroden und/oder sind Torsionsschwingungen um die Längsachse der Elektroden.

Beispielsweise weist die Dämpfungsvorrichtung eine Dämpfungsrolle auf, deren Rotationsachse senkrecht zur Längsrichtung und senkrecht zur Richtung der Breite der Elektroden ist, wobei die Dämpfungsrolle in Richtung der Breite beweglich gelagert ist und die auf einer Kante jeder der Elektroden aufliegt, insbesondere auf der der Kühlwalze abgewandten Kante. Somit lässt sich eine Dämpfungsvorrichtung mit nur einer Dämpfungsrolle realisieren.

Alternativ oder zusätzlich weist die Dämpfungsvorrichtung zwei Dämpfungsrollen auf, deren Rotationsachsen senkrecht zur Längsrichtung und parallel zur Richtung der Breite der Elektroden sind, wobei jede der Elektroden an einer der Dämpfungsrollen anliegt. Hierdurch wird jede Elektrode separat gedämpft, wodurch sich die Elektroden nicht gegenseitig beeinflussen können.

Die Dämpfungsrollen liegen dabei insbesondere an den Seitenflächen der Elektroden an.

Die beiden Elektroden laufen zum Beispiel zwischen den beiden Dämpfungsrollen hindurch.

In einer Ausführungsform weist die Anlegevorrichtung mehrere Isoliervorrichtungen auf, insbesondere Isolierrohre, Isoliertüllen und/oder Isolierhülsen, die sich von der zugehörigen Spuleinheit zum Anlegebereich hin erstrecken, wobei die Elektroden durch die Isoliervorrichtungen verlaufen, insbesondere wobei für jede der Elektroden an jeder der Spuleinheiten wenigstens eine der Isoliervorrichtungen vorgesehen ist. Mittels der Isoliervorrichtungen werden Funkenüberschläge außerhalb des Anlegebereichs zuverlässig verhindert.

Beispielsweise sind die Isoliervorrichtungen aus Polyetheretherketon (PEEK), insbesondere aus getempertem Polyetheretherketon.

Die Isoliervorrichtungen umschließen die Elektroden zumindest an der der Kühlwalze zugewandten Kante.

In einer Ausgestaltung sind die Isoliervorrichtungen schwingungsgedämpft an der Dämpfungsvorrichtung befestigt, um Schwingungen der darin geführten Elektrode zu minimieren.

In einer weiteren Ausführungsform ist wenigstens eine der Elektroden mit einer Niederspannung beaufschlagt, insbesondere zusätzlich zur Beaufschlagung mit der Hochspannung, wodurch sich die mit Niederspannung beaufschlagte Elektrode erhitzt und somit Ablagerungen bzw. Kondensat an der Elektrode verringert werden, da sich solche Ablagerungen bzw. Kondensat hauptsächlich auf kalten Oberflächen bilden.

Zum Beispiel kann sich aufgrund der Niederspannung ein elektrischer Strom zwischen den beiden Spuleinheiten über jede der Elektroden ausbilden. Insbesondere sind die Elektroden nicht geerdet, sodass der Strom bei einem Riss der Elektrode zum Erliegen kommt.

Die Niederspannung hat beispielsweise eine Spannung von maximal 150 V, beispielweise zwischen 60 V und 130 V, insbesondere 120 V. Der durch die Niederspannung erzeugte Strom kann eine Stromstärke zwischen 1 A und 8 A haben.

Beispielsweise weist die Anlegevorrichtung hierzu eine Niederspannungsquelle auf. Die Hochspannungsquelle und die Niederspannungsquelle können als ein Gerät ausgeführt sein.

Die Aufgabe wird ferner gelöst durch eine Kühlwalzeneinheit (auch "Casting Unit" genannt), zumindest enthaltend eine Breitschlitzdüse, eine Kühlwalze und eine Anlegevorrichtung wie zuvor beschrieben, insbesondere wobei die Kühlwalze geerdet ist.

Durch die angelegte Hochspannung und der Erdung der Kühlwalze bildet sich ein geringer elektrischer Strom aus, Pinningstrom genannt.

Bei einer Hochspannung von 20 kV liegt der Strom beispielsweise im Bereich zwischen 25 mA und 30 mA. Bei einer Hochspannung von 9 kV kann ein Strom von etwa 9 mA bis 12 mA entstehen.

Sollte eine Elektrode reißen, wird die Hochspannungsquelle abgeschaltet. Ein Riss der Elektrode kann mittels Flankenerkennung erfolgen.

Die zur Anlegevorrichtung beschriebenen Vorteile und Merkmale gelten gleichermaßen für die Kühlwalzeneinheit und umgekehrt.

Die Elektroden können einen Abstand zur Kühlwalze von wenigstens der Dicke des Films, beispielsweise von wenigstens 2 mm und/oder höchstens 20 mm haben.

Ferner wird die Aufgabe gelöst durch eine Reckanlage zum Herstellen einer Folie, insbesondere eine Quer-, Längs- und/oder Simultan-Reckanlage, mit einem Ofen und einer Kühlwalzeneinheit wie zuvor beschrieben.

Die zur Anlegevorrichtung und/oder zur Kühlwalzeneinheit beschriebenen Vorteile und Merkmale gelten gleichermaßen für die Reckanlage und umgekehrt.

Weitere Merkmale und Vorteile der Erfindung ergeben sich aus der nachfolgenden Beschreibung sowie aus den beigefügten Zeichnungen, auf die Bezug genommen wird. In den Zeichnungen zeigen:
- Figur 1: eine erfindungsgemäße Reckanlage mit einer erfindungsgemäßen Kühlwalzeneinheit in einer schematischen Ansicht,
- Figur 2: die Kühlwalzeneinheit gemäß Figur 1 mit einer erfindungsgemäßen Anlegevorrichtung in einer schematischen perspektivischen Darstellung,
- Figur 3: einen Querschnitt durch die Kühlwalzeneinheit schematisch während des Betriebs,
- Figur 4: eine perspektivische Ansicht einer der Spuleinheiten der Anlegevorrichtung nach Figur 2,
- Figur 5, 6: schematisch verschiedene Teile der Anlegevorrichtung innerhalb der zweiten bzw. ersten Spuleinheit sowie den Elektrodenverlauf innerhalb der entsprechenden Spuleinheit,
- Figur 7: eine perspektivische Ansicht der Elektroden beim Austritt aus den Isoliervorrichtungen der Spuleinheit gemäß Figur 4,
- Figur 8: eine perspektivische Ansicht einer Dämpfungsvorrichtung der Spuleinheit gemäß Figur 4,
- Figur 9: einen perspektivischen Ausschnitt aus der Dämpfungsvorrichtung der Figur 8,
- Figur 10: eine zweite Ausführungsform einer Dämpfungsvorrichtung für eine Spuleinheit einer erfindungsgemäßen Anlegevorrichtung,
- Figur 11: die Dämpfungsvorrichtung gemäß Figur 10 in einer anderen Ansicht und teilweise geöffnet, und
- Figuren 12, 13 und 14: einen schematischen Schnitt durch eine dritte, vierte bzw. fünfte Ausführungsform der Anlegevorrichtung während des Betriebs.

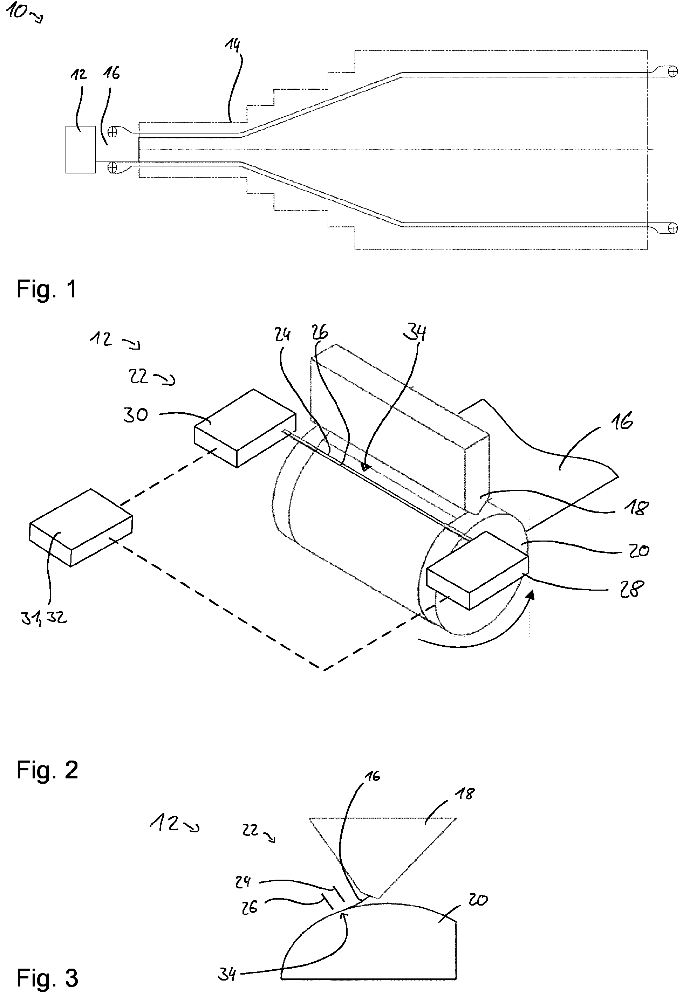

Figur 1 zeigt eine erfindungsgemäße Reckanlage 10 zum Herstellen einer Folie mit einer Kühlwalzeneinheit 12 (auch "Casting Unit" genannt) und einem Ofen 14. Die Reckanlage 10 ist beispielsweise eine Quer-, Längs-, und/oder Simultan-Reckanlage.

Zur Herstellung der Folie erzeugt im vorliegenden Beispiel die Kühlwalzeneinheit 12 zunächst einen Film 16 (auch "Cast Film" genannt) der dem Ofen 14 zugeführt wird. Im Ofen 14 wird der Film 16 in an sich bekannter Weise in Längsrichtung und/oder in Querrichtung gereckt, wodurch eine mono- oder biaxial orientierte Folie hergestellt wird.

In Figur 2 ist die Kühlwalzeneinheit 12 in einer vergrößerten schematischen Ansicht dargestellt.

Die hier gezeigte Kühlwalzeneinheit 12 umfasst eine Breitschlitzdüse 18, eine Kühlwalze 20 sowie eine Anlegevorrichtung 22.

Die Kühlwalze 20 ist gekühlt und wird daher auch Kühlwalze oder "Chill Roll" genannt.

Die Breitschlitzdüse 18 ist oberhalb der Kühlwalze 20 angeordnet und dazu ausgebildet, kontinuierlich eine Kunststoffschmelze auf die Kühlwalze 20 aufzutragen, die den Film 16 bildet. Der verwendete Kunststoff ist insbesondere ein Polyethylenterephthalat (PET), ist aber nicht hierauf limitiert.

Der Film 16 wird dann mittels der Anlegevorrichtung 22 an die Kühlwalze 20 gleichmäßig angelegt. Die Kühlwalze 20 dreht sich dabei in der Ansicht gemäß Figur 2 entgegen dem Uhrzeigersinn. Der auf diese Weise erzeugte Film 16 wird schließlich, im gezeigten Ausführungsbeispiel nach etwa einer dreiviertel Drehung der Kühlwalze 20, von der Kühlwalze 20 abgelöst, ggf. noch abgekühlt und dem Ofen 14 zugeführt.

Die Anlegevorrichtung 22 ist eine elektrostatische Anlegevorrichtung und weist zwei Elektroden, nämlich eine erste Elektrode 24 und eine zweite Elektrode 26, zwei Spuleinheiten, nämlich eine erste Spuleinheit 28 und eine zweite Spuleinheit 30, eine Niederspannungsquelle 31 sowie eine Hochspannungsquelle 32 auf.

In gezeigten Ausführungsbeispiel sind die Niederspannungsquelle 31 und die Hochspannungsquelle 32 als ein Gerät ausgebildet. Die Niederspannungsquelle 31 und die Hochspannungsquelle 32 können auch als getrennte Geräte ausgeführt sein.

Die Spuleinheiten 28, 30 sind in Axialrichtung der Kühlwalze 20 vor bzw. hinter der Kühlwalze 20 angeordnet. Zwischen den beiden Spuleinheiten 28, 30 ist ein Anlegebereich 34 ausgebildet, der ebenfalls in Axialrichtung der Kühlwalze 20 gesehen den Bereich des Films 16 auf der Kühlwalze 20 umfasst.

Die Elektroden 24, 26 sind jeweils beide in jede der Spuleinheiten 28, 30 befestigt und erstrecken sich zwischen den beiden Spuleinheiten 28, 30, d. h. auch durch den Anlegebereich 34.

In Figur 3 ist eine schematische Ansicht der Kühlwalzeneinheit 12 in Axialrichtung der Kühlwalze 20 dargestellt. Zur Vereinfachung sind von der Anlegevorrichtung 22 lediglich die Elektroden 24, 26 dargestellt.

Die Elektroden 24, 26 sind in der gezeigten ersten Ausführungsform bandförmig, d. h. sie haben eine Breite die sehr viel länger als ihre Dicke ist, insbesondere um eine Größenordnung länger. Zudem haben sie in ihrer Längsrichtung eine Länge, die um Größenordnungen größer als ihre Breite ist.

Die Elektroden 24, 26 haben somit zwei Seitenflächen, die sich in Längsrichtung der Elektrode 24, 26 und in Richtung ihrer Breite erstrecken, sowie zwei Kanten. Eine der Kanten ist der Kühlwalze 20 zugewandt und eine der Kanten ist von der Kühlwalze 20 abgewandt. Die Richtung zwischen den Kanten der gleichen Elektrode 24, 26 wird als die Richtung der Breite der Elektroden 24, 26 bezeichnet.

Im ersten Ausführungsbeispiel haben die beiden Elektroden 24, 26 die gleiche Breite, beispielsweise zwischen 3 mm und 15 mm, insbesondere eine Breite von mehr oder gleich 4 mm und von weniger als 13 mm. Denkbar ist beispielsweise eine Breite von 12,7 mm.

Im gezeigten Ausführungsbeispiel weisen die Elektroden 24, 26 mit je einer ihrer Seitenflächen zur anderen Elektrode 26, 24. Die Seitenflächen und somit auch die beiden Elektroden 24, 26 verlaufen parallel zueinander, zumindest im Anlegebereich 34.

Die Elektroden 24, 26 haben dabei im Anlegebereich 34 einen Abstand von 3 mm bis 15 mm, insbesondere von 5 mm bis 10 mm zueinander.

Die beiden Elektroden 24, 26 sind in Richtung ihrer Breite bündig zueinander angeordnet, d.h. eine Verbindungslinie ihrer Kanten steht senkrecht zur Seitenfläche.

Insbesondere entspricht die Richtung der Breite für eine der Elektroden 24, 26 der Radialrichtung der Kühlwalze 20.

Die Elektroden 24, 26 sind in Rotationsrichtung der Kühlwalze 20 nach der Breitschlitzdüse 18 angeordnet. Beispielsweise haben die Elektroden 24, 26 einen Abstand zur Kühlwalze 20 von wenigstens der Dicke des Films 16, beispielsweise von mindestens 2 mm. Höchstens haben sie einen Abstand zur Kühlwalze 20 von 20 mm.

Die Elektroden 24, 26 sind von der Hochspannungsquelle 32 mit einer Hochspannung beaufschlagt. Die Hochspannung beträgt beispielsweise zwischen 5 kV und 10 kV, insbesondere zwischen 7kV und 9 kV.

Die Kühlwalze 20 ist geerdet, sodass im Anlegebereich 34 ein starkes elektrisches Feld entsteht, durch das der Film 16 geführt wird.

Zudem bildet sich ein geringer elektrischer Strom aus, der Pinningstrom genannt wird. Bei einer Hochspannung von 20 kV liegt der Strom beispielsweise bei etwa 30 mA. Bei einer Hochspannung von 9 kV kann ein Strom von etwa 12 mA entstehen.

Sollte eine der Elektroden 24, 26 reißen, wird die Hochspannungsquelle abgeschaltet. Ein Riss einer der Elektroden 24, 26 kann durch die Hochspannungsquelle mittels Flankenerkennung erfolgen.

Ebenfalls ist wenigstens eine, insbesondere beide Elektroden 24, 26 durch die Niederspannungsquelle 31 mit einer Niederspannung beaufschlagt. Die Niederspannung beträgt beispielsweise weniger als 150 V, insbesondere zwischen 60 V und 130 V, beispielsweise 120 V. Die Hochspannung und die Niederspannung kaskadieren entsprechend.

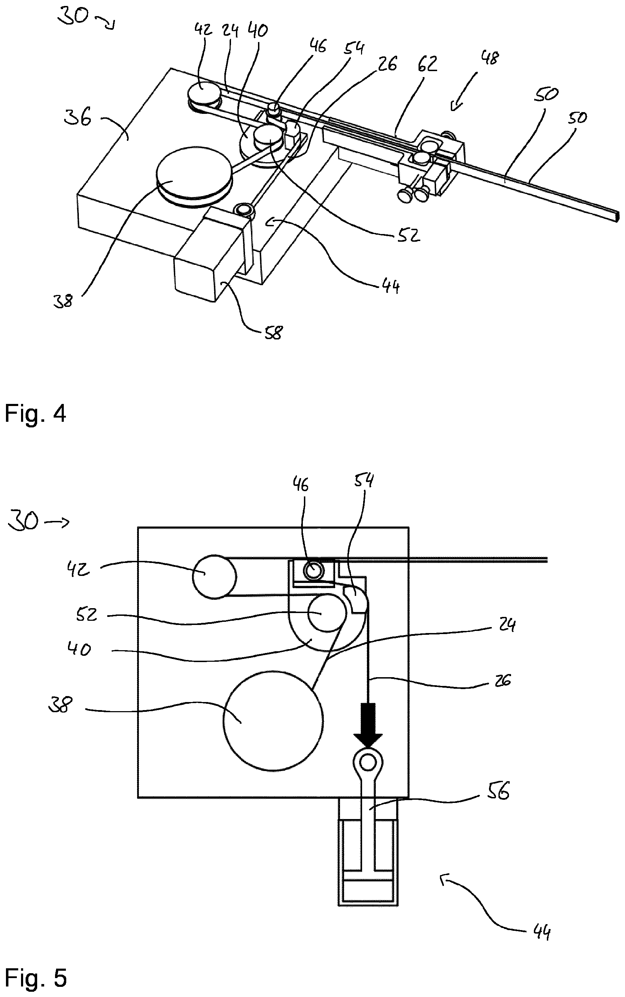

In Figur 4 ist die zweite Spuleinheit 30 geöffnet dargestellt. Die zweite Spuleinheit 30 befindet sich in Bezug auf Figur 2 auf der linken Seite der Kühlwalze 20.

Die erste Spuleinheit 28 auf der rechten Seite der Kühlwalze 20 ist identisch aufgebaut, lediglich spiegelbildlich. Wo Unterschiede bestehen, wird gesondert darauf hingewiesen.

Die zweite Spuleinheit 30 weist ein Gehäuse 36, eine rotierbare Spule 38, eine Spannungszufuhreinrichtung 40, eine erste Umlenkrolle 42, eine mechanische Spannvorrichtung 44, eine zweite Umlenkrolle 46, eine Dämpfungsvorrichtung 48 sowie zwei Isoliervorrichtungen 50 auf.

In Figur 5 ist die Spuleinheit 30 weiter vereinfacht dargestellt, es sind nämlich nur die beiden Elektroden 24, 26 sowie die Komponenten dargestellt, die die Elektroden 24, 26 führen. Beispielsweise sind das Gehäuse 36, die Dämpfungsvorrichtung 48 und die Isoliervorrichtungen 50 nicht gezeigt.

Die erste Elektrode 24 ist teilweise auf der rotierbaren Spule 38 aufgewickelt und verläuft von der rotierbaren Spule 38 zur Spannungszufuhreinrichtung 40.

Die Spannungszufuhreinrichtung 40 ist elektrisch mit der Hochspannungsquelle 32 verbunden und weist eine Rolle 52 sowie einen bogenförmigen Lauf 54 auf.

Die Rolle 52 führt die erste Elektrode 24 und beaufschlagt dabei die erste Elektrode 24 mit der von der Hochspannungsquelle 32 bereitgestellten Hochspannung.

Anschließend verläuft die erste Elektrode 24 zur ersten Umlenkrolle 42 und von dort aus der Spuleinheit 30 hinaus zum Anlegebereich 34.

Die zweite Elektrode 26 ist in der zweiten Spuleinheit 30 an der Spannvorrichtung 44 befestigt. Die Spannvorrichtung 44 weist hierzu einen Zugbolzen 56 auf, der mittels eines Motors 58 (Figur 4) betätigt werden kann.

Die zweite Elektrode 26 verläuft dann zur Spannungszufuhreinrichtung 40. An der Spannungszufuhreinrichtung 40 verläuft die zweite Elektrode 26 entlang des Laufes 54.

Der Lauf 54 hat eine bogenförmige Außenseite zur Führung der zweiten Elektrode 26. Beispielsweise beschriebt die bogenförmige Außenseite einen Kreissektor.

Durch den Kontakt mit dem Lauf 54 wird die zweite Elektrode 26 mit der Hochspannung beaufschlagt, die die Hochspannungsquelle 32 bereitstellt.

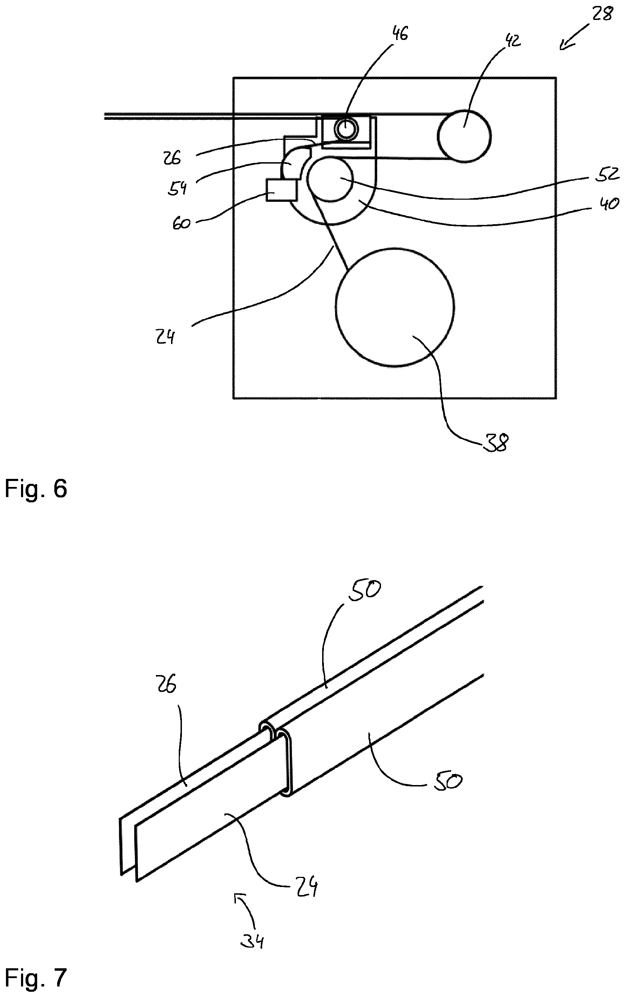

Anschließend verläuft die zweite Elektrode 26 über die zweite Umlenkrolle 46 durch die sie in parallele Anordnung mit der ersten Elektrode 24 gebracht wird. Die beiden Elektroden 24, 26 verlaufen dann aus der zweiten Spuleinheit 30 durch den Anlegebereich 34 und schließlich in die erste Spuleinheit 28, die in reduzierter Form in Figur 6 wiedergegeben ist.

Die erste Elektrode 24 verläuft in umgekehrter Reihenfolge wie zur zweiten Spuleinheit 30 beschrieben zunächst über die erste Umlenkrolle 42, die Rolle 52 der Spannungszufuhreinrichtung 40 und schließlich auf die rotierbare Spule 38.

Die Spannungszufuhreinrichtung 40 der ersten Spuleinheit 28 ist ebenfalls mit der Hochspannungsquelle 32 elektrisch verbunden. Es ist jedoch auch denkbar, dass jede der Spuleinheiten 28, 30 eine separate Hochspannungsquelle hat.

Die beiden rotierbaren Spulen 38 der Spuleinheiten 28, 30 können angetrieben sein. Auf diese Weise kann die erste Elektrode zwischen der ersten Spuleinheit 28 und der zweiten Spuleinheit 30 verfahren werden. Beispielsweise wird die erste Elektrode 24 von der rotierbaren Spule 38 der ersten Spuleinheit 28 abgewickelt verläuft durch den Anlegebereich 34 in die zweite Spuleinheit 30, wo sie von der rotierbaren Spule 38 der zweiten Spuleinheit 30 aufgewickelt wird.

Zudem kann mittels der angetriebenen rotierbaren Spulen 38 der Zug bzw. die mechanische Spannung der ersten Elektrode 24 eingestellt werden.

Dagegen ist die zweite Elektrode 26 im gezeigten Ausführungsbeispiel statisch. Sie läuft in die erste Spuleinheit 28 ein und wird von der zweiten Umlenkrolle 46 zur Spannungszufuhreinrichtung 40 geleitet. Anschließend ist die zweite Elektrode 26 mittels eines Endstücks 60 in der ersten Spuleinheit 28 ortsfest fixiert. Die erste Spuleinheit 28 weist somit im Gegensatz zur zweiten Spuleinheit 30 keine Spannvorrichtung 44 auf.

Der Zug bzw. die mechanische Spannung der zweiten Elektrode 26 wird mittels der Spannvorrichtung 44 eingestellt.

Denkbar ist jedoch auch, dass anstelle des Endstücks 60 und der Spannvorrichtung 44 ebenfalls rotierbare Spulen für die zweite Elektrode 26 vorgesehen sind, ähnlich der rotierbaren Spulen 38 für die erste Elektrode 24. Auf diese Weise ist dann auch die zweite Elektrode 26 verfahrbar ausgestaltet.

Beispielsweise kann für jede Elektrode 24, 26 eine eigene rotierbare Spule in jeder Spuleinheit 28, 30 vorgesehen sein.

Denkbar ist auch, dass mehrere der Elektroden 24, 26 auf die gleiche rotierbare Spule 38 aufgewickelt werden. In diesem Falle ist beispielsweise eine gemeinsame rotierbare Spule 38 vorgesehen, die verschiedene Bereiche für die verschiedenen Elektroden 24, 26 aufweist. Die mechanische Spannung der verschiedenen Elektroden 24, 26 kann dann durch eine Spannvorrichtung für jede der Elektroden 24, 26 eingestellt werden.

Wie in Figur 4 dargestellt, laufen die Elektroden 24, 26 aus den Spuleinheiten 28, 30 durch die Dämpfungsvorrichtungen 48 und schließlich durch die Isoliervorrichtungen 50 aus den Spuleinheiten 28, 30 hinaus.

Die Isoliervorrichtungen 50 erstrecken sich dabei von der Dämpfungsvorrichtung 48 ausgehend bis hin zum Anlegebereich 34, wie auch in Figur 2 zu erkennen ist.

Insbesondere erstrecken sich die Isoliervorrichtungen 50 entlang desjenigen Bereiches der Kühlwalze 20, an der kein Film 16 aufgetragen wird.

In Figur 7 ist eine perspektivische Ansicht auf das Ende der Isoliervorrichtungen 50 gezeigt, die zum Anlegebereich 34 weist. In der gezeigten Darstellung treten die Elektroden 24, 26 aus den Isoliervorrichtungen 50 aus und verlaufen dann im Anlegebereich 34.

Die Isoliervorrichtungen 50 sind zum Beispiel Isolierrohre, Isoliertüllen und/oder Isolierhülsen. Sie haben einen länglichen Querschnitt, der annähernd rechteckig ist. Beispielsweise sind die Ecken abgerundet oder die kurzen Seiten sind durch bogenförmige Abschnitte gebildet.

Die Innendurchmesser der Isoliervorrichtungen 50 in ihrer Längsrichtung entsprechen dabei der Breite der Elektroden 24, 26, sodass je eine Elektrode 24, 26 in einer der Isoliervorrichtungen 50 geführt werden kann.

Im gezeigten Ausführungsbeispiel umgeben die Isoliervorrichtungen 50 die aufgenommene Elektrode 24, 26 entlang ihres Umfangs jeweils vollständig.

Denkbar ist jedoch auch, dass die Elektroden 24, 26 nicht vollständig umschlossen sind, solange sie zueinander und/oder zur Kühlwalze hin 20 von der jeweiligen Isoliervorrichtung 50 umschlossen sind.

Die Isoliervorrichtungen 50 sind aus einem Kunststoff hergestellt, insbesondere aus Polyetheretherketon, PEEK. Insbesondere ist das PEEK ein getempertes PEEK. Isoliervorrichtungen 50 aus getempertem PEEK haben sich als besonders langlebig erwiesen.

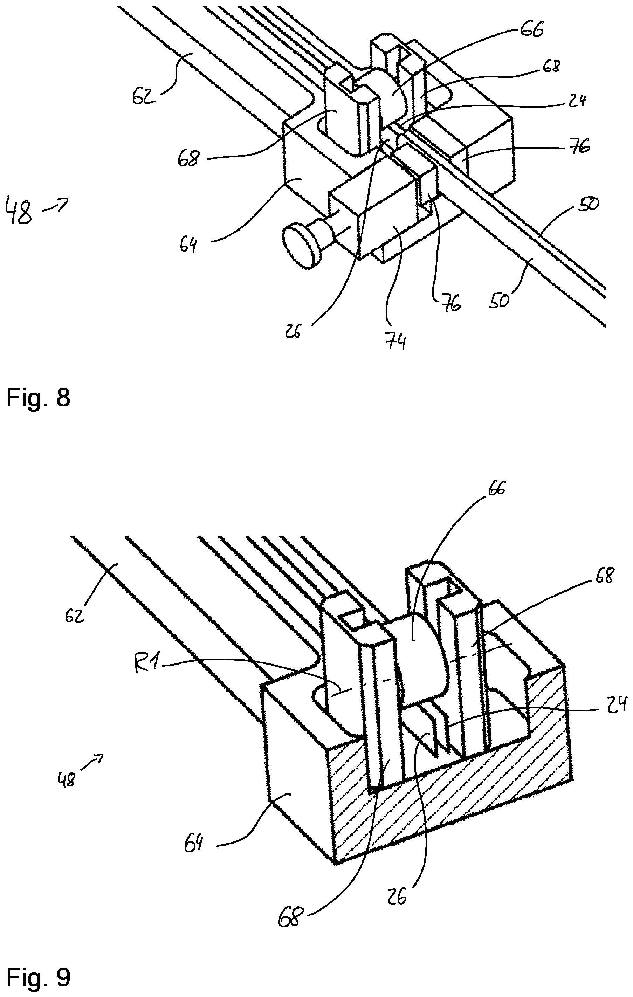

Die Isoliervorrichtungen 50 sind am Ausgang der Dämpfungsvorrichtungen 48 mittels einer Befestigungsvorrichtung 74 befestigt, wie in Figur 8 zu sehen ist.

Die Befestigungsvorrichtung 74 hat beispielsweise schwingungsdämpfende Elemente 76, wie Dämpfer aus elastischem Material, zwischen denen die Isoliervorrichtungen 50 geklemmt werden. Die Klemmung kann zum Beispiel mittels einer Schraube eingestellt werden.

Die Dämpfungsvorrichtungen 48 sind an einem Ausleger 62 vorgesehen, der sich vom Gehäuse 36 der jeweiligen Spuleinheit 28, 30 in Richtung zum Anlegebereich 34 hin erstreckt.

Insbesondere ist die Länge des Auslegers 62 verstellbar, beispielsweise mittels eines Motors und eines Zahnstangengetriebes.

Die Dämpfungsvorrichtung 48 ist in den Figuren 8 und 9 vergrößert dargestellt. Die Dämpfungsvorrichtung 48 weist einen Tragrahmen 64 und eine Dämpfungsrolle 66 auf.

Der Tragrahmen 64 hat zwei Stützen 68, die auf verschiedenen Seiten der beiden Elektroden 24, 26 angeordnet sind. In anderen Worten verlaufen die beiden Elektroden 24, 26 zwischen den beiden Stützen 68 hindurch.

Die Dämpfungsrolle 66 ist oberhalb, d. h. auf der von der Kühlwalze 20 abgewandten Seite der Elektroden 24, 26 angeordnet. Die Dämpfungsrolle 66 ist um eine Rotationsachse R1 drehbar am Tragrahmen 64 gelagert, wobei die Rotationsachse R1 senkrecht zur Längsrichtung der Elektroden 24, 26 sowie senkrecht zur Richtung der Breite der Elektroden 24, 26 steht.

Die Dämpfungsrolle 66 liegt auf den oberen Kanten der beiden Elektroden 24, 26 auf, d.h. den von der Kühlwalze 20 abgewandten Kanten. Sie rotiert daher mit der Bewegung der ersten Elektrode 24 beim Auf- bzw. Abspulen.

In Richtung der Breite der Elektroden 24, 26 ist die Dämpfungsrolle 66 beweglich gelagert, beispielsweise federbeaufschlagt.

Während des Betriebs der Reckanlage 10 wird mittels der Anlegevorrichtung 22, insbesondere der beiden parallel verlaufenden, bandförmigen, mit Hochspannung beaufschlagten Elektroden 24, 26, ein elektrisches Hochspannungs-Feld zwischen den Elektroden 24, 26 und der Kühlwalze 20 erzeugt. Der Film 16 durchläuft das elektrische Feld aufgrund der Drehbewegung der Kühlwalze 20.

Durch das elektrische Feld wird die Oberfläche der Kühlwalze 20 elektrisch aufgeladen und die polaren Moleküle des Kunststoffmaterials des Films 16 richten sich aus. Dadurch entsteht eine elektrostatische Anziehungskraft zwischen der Kühlwalze 20 und dem Film 16. Durch diese Anziehungskraft wird der Film 16 gleichmäßig an die Kühlwalze 20 angelegt.

Während des Betriebs wird die erste Elektrode 24 (und gegebenenfalls bei Vorsehen entsprechender rotierbarer Spulen 38 auch die zweite Elektrode 26) kontinuierlich entlang ihrer Längsrichtung verfahren, d.h. in der ersten Spuleinheit 28 abgespult und in der zweiten Spuleinheit 30 aufgespult, oder umgekehrt. Auf diese Weise werden Ablagerungen abtransportiert, die durch Ausdampfungen des Kunststoffmaterials des Films 16 hervorgerufen werden, wodurch die Homogenität des elektrischen Feldes vergrößert wird.

Ablagerungen werden zudem durch die an die Elektroden 24, 26 angelegte Niederspannung verringert. Durch die Niederspannung entsteht ein Strom, auch Heizstrom genannt, durch jede der Elektroden 24, 26 von der ersten Spuleinheit 28 zur zweiten Spuleinheit 30 (oder umgekehrt) mit einer Stromstärke zwischen 1 A und 8 A.

Zum Beispiel liegt die Stromstärke durch eine als 3mm-Band ausgeführte Elektrode 24, 26 zwischen 2 und 2,5 A und bei etwa 7 A durch eine als 12,7 mm-Band ausgeführte Elektrode 24, 26. Bei der Verwendung eines Drahts als Elektrode 26 sind die Ströme kleiner.

Die Elektroden 24, 26 sind nicht geerdet, sodass ein Riss einer Elektrode 24, 26 eine Unterbrechung des Stroms zur Folge hat.

Durch den Strom heizen sich die Elektroden 24, 26 auf, wodurch sich die Ausdampfungen des Kunststoffmaterials des Films 16 weniger stark als Kondensat an den Elektroden 24, 26 niederschlagen.

Trotz der durch die rotierbaren Spulen 38 bzw. der Spannvorrichtung 44 auf die Elektroden 24, 26 aufgebrachte mechanische Spannung können die Elektroden 24, 26 schwingen, beispielsweise mit einer Amplitude senkrecht zu den Seitenflächen, in Richtung der Breite der Elektroden 24, 26 und/oder um die Längsachse der Elektroden 24, 26. Die Dämpfungsvorrichtung 48 dämpft oder verhindert diese etwaigen Schwingungen der Elektroden 24, 26, sodass das elektrische Feld konstant bleibt. Die Qualität des Anligens wird dadurch weiter erhöht.

Denkbar ist auch, dass Schwingungen durch einen wellenförmigen Verlauf der Elektroden 24, 26 im Anlegebereich 34 verhindert werden. Hierzu weist die Anlegevorrichtung 22 dann einen Bügel mit Stiften auf, um die die Elektroden 24, 26 geführt sind.

Durch die Verwendung der beiden bandförmigen Elektroden 24, 26 ergibt sich das Maximum des elektrischen Feldes an der Folienoberfläche an der Stelle, die zum ersten Mal mit der Kühlwalze 20 in Kontakt kommt. Auf diese Weise kann die Hochspannung reduziert werden, ohne dass die Qualität des Anlegens verringert wird, Funkenüberschläge werden dadurch verringert.

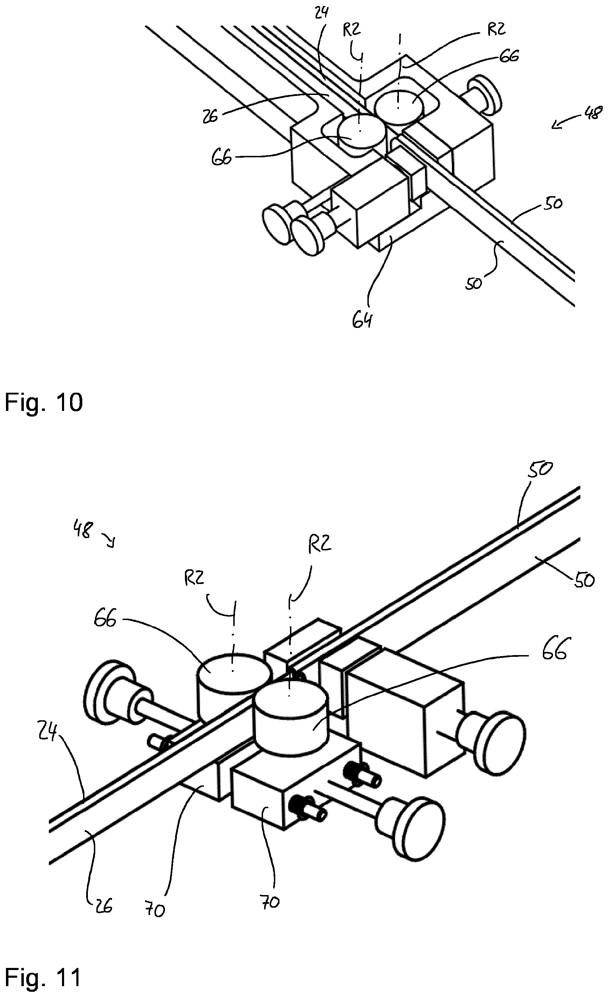

In den Figuren 10 und 11 ist eine zweite Ausführungsform der erfindungsgemäßen Kühlwalzeneinheit 12 bzw. Anlegevorrichtung 22 dargestellt. Diese entspricht im Wesentlichen der ersten Ausführungsform, sodass im Folgenden lediglich auf die Unterschiede eingegangen wird. Gleiche und funktionsgleiche Teile sind mit denselben Bezugszeichen versehen.

Die Figuren 10 und 11 zeigen eine Dämpfungsvorrichtung 48 einer zweiten Ausführungsform der Anlegevorrichtung 22.

In dieser zweiten Ausführungsform weist die Dämpfungsvorrichtung 48 zwei Dämpfungsrollen 66 auf, die auf je einem Lagerblock 70 befestigt sind.

Jeder Lagerblock 70 ist federnd senkrecht zu den Seitenflächen der Elektroden 24, 26 gelagert, sodass auch die Dämpfungsrollen 66 federnd gelagert sind.

Jede der Dämpfungsrollen 66 ist um eine Rotationsachse R2 rotierbar, die senkrecht zur Längsrichtung und parallel zur Richtung der Breite der Elektroden 24, 26 ist. In anderen Worten erstrecken sich die Rotationsachse R2 parallel zu den Seitenflächen, aber senkrecht zur Längsrichtung der Elektroden 24, 26.

Die beiden Elektroden 24, 26 sind zwischen den beiden Dämpfungsrollen 66 hindurchgeführt, wobei je eine der Dämpfungsrollen 66 die Seitenfläche einer der Elektroden 24, 26 berührt. Die beiden Elektroden 24, 26 berühren sich insbesondere weiterhin untereinander nicht.

In anderen Worten ist jeder Dämpfungsrolle 66 eine der Elektroden 24 oder 26 zugeordnet, die an deren Seitenfläche läuft.

Denkbar ist auch, dass zusätzlich zu den beiden Dämpfungsrollen 66 der zweiten Ausführungsform ebenfalls eine Dämpfungsrolle 66 wie zur ersten Ausführungsform gezeigt vorhanden ist, um die Dämpfungswirkung weiter zu erhöhen.

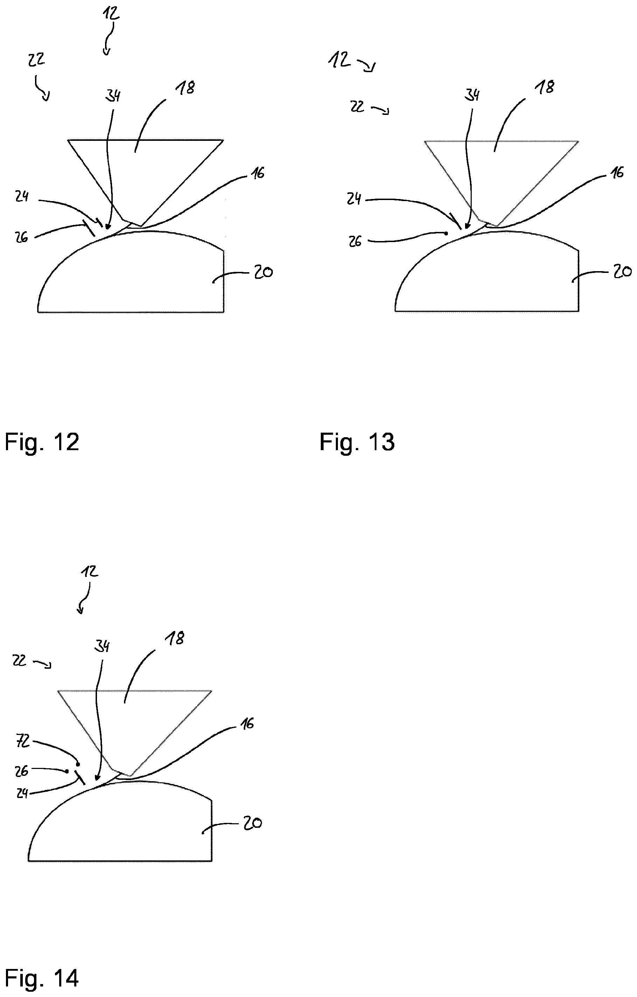

In den Figuren 12 bis 14 sind weitere Ausführungsformen der Anlegevorrichtung 22 dargestellt, die im Wesentlichen der ersten Ausführungsform entsprechen. Im Folgenden wird daher lediglich auf die Unterschiede eingegangen und gleiche und funktionsgleiche Teile sind denselben Bezugszeichen versehen. Sie können zudem die Merkmale der zweiten Ausführungsform aufweisen.

In Figur 12 ist eine dritte Ausführungsform der Anlegevorrichtung 22 in einem Schnitt ähnlich dem der Figur 3 dargestellt.

In dieser Ausführungsform haben die bandförmigen Elektroden 24, 26 nicht die gleiche Breite, sondern sie haben eine unterschiedliche Breite.

Im gezeigten Ausführungsbeispiel hat die erste Elektrode 24 eine geringere Breite als die zweite Elektrode 26. Ebenso ist es denkbar, dass die zweite Elektrode 26 eine geringere Breite als die erste Elektrode 24 hat.

Außerdem ist die zweite Elektrode 26 zur ersten Elektrode 24 in Richtung ihrer Breite versetzt. Auf diese Weise kann das elektrische Feld an die spezifischen Gegebenheiten der Anlegevorrichtung 22 oder der Kühlwalzeneinheit 12, beispielsweise der Breitschlitzdüse 18 angepasst werden.

Denkbar ist ebenfalls, dass die Anlegevorrichtung 22 drei oder mehr bandförmige Elektroden aufweist, die parallel im Anlegebereich 34 verlaufen. Eine, mehrere oder alle dieser Elektroden können dabei in ihrer Längsrichtung verfahrbar sein.

In Figur 13 ist eine vierte Ausführungsform der Anlegevorrichtung 22 in einem Schnitt ähnlich dem der Figur 3 dargestellt.

In dieser vierten Ausführungsform ist die zweite Elektrode 26 nicht bandförmig, sondern drahtartig, insbesondere als Draht ausgeführt. Denkbar sind zudem nahezu beliebige andere Querschnitte der zweiten Elektrode 26.

Die zweite Elektrode 26 verläuft in der vierten Ausführungsform im selben Abstand zur Kühlwalze 20 wie die erste Elektrode 24, genauer gesagt die der Kühlwalze 20 zugewandte Kante der ersten Elektrode 24.

Denkbar ist jedoch auch, dass die zweite Elektrode 26 weiter entfernt von der Kühlwalze 20 angeordnet ist.

In Figur 14 ist eine fünfte Ausführungsform der Anlegevorrichtung 22 in einem Schnitt ähnlich dem der Figur 3 dargestellt.

In dieser fünften Ausführungsform weist die Anlegevorrichtung 22 zusätzlich zur ersten Elektrode 24 und zur zweiten Elektrode 26 eine dritte Elektrode 72 auf. Die Anlegevorrichtung 22 der fünften Ausführungsform hat somit drei Elektroden 24, 26, 72.

Die erste Elektrode 24 ist bandförmig. Die zweite Elektrode 26 und die dritte Elektrode 72 sind als drahtartig, insbesondere als Drähte ausgeführt. Denkbar sind zudem nahezu beliebige andere Querschnitte der zweiten Elektrode 26 und/oder der dritten Elektrode 72.

Die zweite und die dritte Elektrode 26, 72 sind auf verschiedenen Seiten der ersten Elektrode 24 angeordnet. Die zweite und die dritte Elektrode 26, 72 können den gleichen Abstand zur ersten Elektrode 24 haben

Im gezeigten Beispiel liegt die erste Elektrode 24 jedoch nicht direkt zwischen der zweiten und dritten Elektrode 26, 72, d.h. die erste Elektrode 24 schneidet eine gedachte Verbindungslinie zwischen der zweiten Elektrode 26 und der dritten Elektrode 72 nicht.

Die erste Elektrode 24 liegt gegenüber der zweiten und der dritten Elektrode 26, 72 zur Kühlwalze 20 hin versetzt.

Die zweite und die dritte Elektrode 26, 72 können den gleichen Abstand zur Kühlwalze 20 haben.

Durch die verschiedenen Anordnungen und Ausbildungen der Elektroden 24, 26, 72 kann für die jeweilige Anwendung, insbesondere für das jeweils verwendete Kunststoffmaterial das elektrische Feld passend ausgebildet werden.

Denkbar ist ebenfalls, dass die zweite Elektrode 26 und/oder die dritte Elektrode 72 bandförmig sind.

Ebenfalls kann jede einzelne der drei Elektroden 24, 26, 72 mit Hochspannung und/oder mit Niederspannung beaufschlagt sein, sowie entweder in Längsrichtung verfahrbar oder statisch ausgeführt sein.

## Patentansprüche

1. Anlegevorrichtung zum elektrostatischen Anlegen eines Films (16) an eine Kühlwalze (20), mit einer ersten Spuleinheit (28), einer zweiten Spuleinheit (30), einem zwischen den Spuleinheiten (28, 30) liegenden Anlegebereich (34), einer Hochspannungsquelle (32) sowie wenigstens zwei Elektroden (24, 26),
wobei zumindest die erste Elektrode (24) der wenigstens zwei Elektroden (24, 26) bandförmig ist,
wobei die Elektroden (24, 26) von der ersten Spuleinheit (28) zur zweiten Spuleinheit (30) im Anlegebereich (34) verlaufen, und
wobei die beiden Elektroden (24, 26) durch die Hochspannungsquelle (32) mit Hochspannung beaufschlagt sind,
wobei eine, mehrere oder alle der Elektroden (24, 26, 72) zwischen der ersten Spuleinheit (28) und der zweiten Spuleinheit (30) in ihre Längsrichtung verfahrbar sind.

2. Anlegevorrichtung nach Anspruch 1, **dadurch gekennzeichnet, dass** die zweite Elektrode (26) der wenigstens zwei Elektroden (24, 26) bandförmig ist oder drahtartig, insbesondere ein Draht ist.

3. Anlegevorrichtung nach Anspruch 1 oder 2, **dadurch gekennzeichnet, dass** eine dritte Elektrode (72) vorgesehen ist, wobei die dritte Elektrode (72) bandförmig ist oder drahtartig, insbesondere ein Draht ist.

4. Anlegevorrichtung nach einem der vorhergehenden Ansprüche, dass die Elektroden (24, 26, 72) parallel zueinander verlaufen und/oder jeweils zwei Seitenflächen aufweisen, wobei die Elektroden (24, 26, 72) mit je einer ihrer Seitenflächen einander zugewandt sind.

5. Anlegevorrichtung nach einem der vorhergehenden Ansprüche, **dadurch gekennzeichnet, dass** die Elektroden (24, 26, 72) im Anlegebereich (34) einen Abstand von 3 mm bis 15 mm, insbesondere von 5 mm bis 10 mm zueinander haben.

6. Anlegevorrichtung nach einem der vorhergehenden Ansprüche, **dadurch gekennzeichnet, dass** die Elektroden (24, 26, 72) die gleiche Breite haben oder unterschiedliche Breiten haben und/oder dass die Breite der Elektroden (24, 26, 72) zwischen 3 mm und 15 mm liegt, insbesondere größer oder gleich 4 mm und kleiner als 13 mm, und/oder
**dadurch gekennzeichnet, dass** die Elektroden (24, 26, 72) in Richtung ihrer Breite versetzt oder bündig angeordnet sind.

7. Anlegevorrichtung nach einem der vorhergehenden Ansprüche, **dadurch gekennzeichnet, dass** in der ersten und in der zweiten Spuleinheit (28, 30) wenigstens eine rotierbare Spule (38) vorgesehen ist, auf der die eine, mehrere oder alle der Elektroden (24, 26, 72) teilweise aufgewickelt sind.

8. Anlegevorrichtung nach einem der vorhergehenden Ansprüche, **dadurch gekennzeichnet, dass** in wenigstens einer der Spuleinheiten (28, 30), insbesondere in beiden Spuleinheiten (28, 30), eine Spannungszufuhreinrichtung (40) vorgesehen ist, die die Elektroden (24, 26, 72) mit der wenigstens einen Hochspannungsquelle (32) elektrisch verbindet, insbesondere wobei die Spannungszufuhreinrichtung (40) eine Rolle (52) aufweist, an der die erste Elektrode (24) geführt ist, und/oder wobei die Spannungszufuhreinrichtung (40) einen bogenförmigen Lauf (54) hat, entlang dem die zweite Elektrode (26) und/oder die dritte Elektrode (72) geführt ist.

9. Anlegevorrichtung nach einem der vorhergehenden Ansprüche, **dadurch gekennzeichnet, dass** die erste Spuleinheit (28) und/oder die zweite Spuleinheit (30) eine Dämpfungsvorrichtung (48) aufweist, die dazu eingerichtet ist, Schwingungen der Elektroden (24, 26) im Anlegebereich (34) zu dämpfen.

10. Anlegevorrichtung nach Anspruch 9, **dadurch gekennzeichnet, dass** die Dämpfungsvorrichtung (48) eine Dämpfungsrolle (66) aufweist, deren Rotationsachse (R1) senkrecht zur Längsrichtung und senkrecht zur Richtung der Breite der Elektroden (24, 26) ist, wobei die Dämpfungsrolle (66) in Richtung der Breite beweglich gelagert ist und auf einer Kante jeder der Elektroden (24, 26, 72) aufliegt, insbesondere auf der der Kühlwalze abgewandten Kante, insbesondere wobei die Dämpfungsvorrichtung (48) zwei Dämpfungsrollen (66) aufweist, deren Rotationsachsen (R2) senkrecht zur Längsrichtung und parallel zur Richtung der Breite der Elektroden (24, 26) sind, wobei jede der Elektroden (24, 26, 72) an einer der Dämpfungsrollen (66) anliegt.

11. Anlegevorrichtung nach einem der vorhergehenden Ansprüche, **dadurch gekennzeichnet, dass** die Anlegevorrichtung (22) mehrere Isoliervorrichtungen (50), insbesondere Isolierrohre, Isoliertüllen und/oder Isolierhülsen, aufweist, die sich von der zugehörigen Spuleinheit (28, 30) zum Anlegebereich (34) hin erstrecken, wobei die Elektroden (24, 26, 72) durch die Isoliervorrichtungen (50) verlaufen, insbesondere wobei für jede der Elektroden (24, 26, 72) an jeder der Spuleinheiten (28, 30) wenigstens eine der Isoliervorrichtungen (50) vorgesehen ist.

12. Anlegevorrichtung nach Anspruch 11, **dadurch gekennzeichnet, dass** die Isoliervorrichtungen (50) schwingungsgedämpft an der Dämpfungsvorrichtung (48) befestigt sind.

13. Anlegevorrichtung nach einem der vorhergehenden Ansprüche, **dadurch gekennzeichnet, dass** wenigstens eine der Elektroden (24, 26, 72) mit einer Niederspannung beaufschlagt ist, insbesondere zusätzlich zur Beaufschlagung mit der Hochspannung.

14. Kühlwalzeneinheit mit einer Breitschlitzdüse (18), einer Kühlwalze (20) und einer Anlegevorrichtung (22) nach einem der vorhergehenden Ansprüche, insbesondere wobei die Kühlwalze (20) geerdet ist.

15. Reckanlage zum Herstellen einer Folie, insbesondere eine Quer-, Längs- und/oder Simultan-Reckanlage, mit einem Ofen (14) und einer Kühlwalzeneinheit (12) nach Anspruch 14.

## Claims

1. Application device for the electrostatic application of a film (16) on a chill roll (20), having a first coil unit (28), a second coil unit (30), an application area (34) that is situated between the coil units (28, 30), a high-voltage source (32) as well as at least two electrodes (24, 26),
wherein at least the first electrode (24) of the at least two electrodes (24, 26) is ribbon-shaped,
wherein the electrodes (24, 26) run from the first coil unit (28) to the second coil unit (30) in the application area (34), and
wherein a high voltage is applied to both the electrodes (24, 26) by the high-voltage source (32),
wherein one, several or all of the electrodes (24, 26, 72) are moveable between the first coil unit (28) and the second coil unit (30) in their longitudinal direction.

2. Application device according to Claim 1, **characterised in that** the second electrode (26) of the at least two electrodes (24, 26) is ribbon-shaped or wire-like, in particular is a wire.

3. Application device according to Claim 1 or 2, **characterised in that** a third electrode (72) is provided, wherein the third electrode (72) is ribbon-shaped or wire-like, in particular is a wire.

4. Application device according to one of the preceding claims, **characterised in that** the electrodes (24, 26, 72) run parallel to each other and/or each have two lateral surfaces, wherein the electrodes (24, 26, 72) each face each other with one of their lateral surfaces.

5. Application device according to one of the preceding claims, **characterised in that** the electrodes (24, 26, 72) in the application area (34) have a spacing of 3 mm to 15 mm, in particular of 5 mm to 10 mm, from each other.

6. Application device according to one of the preceding claims, **characterised in that** the electrodes (24, 26, 72) have the same width or different widths and/or **in that** the width of the electrodes (24, 26, 72) is between 3 mm and 15 mm, in particular greater than or equal to 4 mm and less than 13 mm, and/or
**characterised in that** the electrodes (24, 26, 72) are arranged offset or flush in their width direction.

7. Application device according to one of the preceding claims, **characterised in that** in the first and in the second coil unit (28, 30) at least one rotatable coil (38) is provided onto which the one, several or all of the electrodes (24, 26, 72) are partially wound.

8. Application device according to one of the preceding claims, **characterised in that** in at least one of the coil units (28, 30), in particular in both coil units (28, 30), a voltage supply unit (40) is provided, which electrically connects the electrodes (24, 26, 72) to the at least one high-voltage source (32), in particular wherein the voltage supply unit (40) has a roll (52) on which the first electrode (24) is guided, and/or wherein the voltage supply unit (40) has an arched course (54) along which the second electrode (26) and/or the third electrode (72) is guided.

9. Application device according to one of the preceding claims, **characterised in that** the first coil unit (28) and/or the second coil unit (30) has a damping device (48), which is configured to damp vibrations from the electrodes (24, 26) in the application area (34).

10. Application device according to Claim 9, **characterised in that** the damping device (48) has a damping roll (66) of which the rotational axis (R1) is perpendicular to the longitudinal direction and perpendicular to the width direction of the electrodes (24, 26), wherein the damping roll (66) is mounted so that it can be moved in the width direction and rests on an edge of each of the electrodes (24, 26, 72), in particular on the edge facing away from chill roll, in particular wherein the damping device (48) has two damping rolls (66) of which the rotational axes (R2) are perpendicular to the longitudinal direction and parallel to the width direction of the electrodes (24, 26), wherein each of the electrodes (24, 26, 72) touches one of the damping devices (66).

11. Application device according to one of the preceding claims, **characterised in that** the application device (22) has several insulation devices (50), in particular insulating conduits, insulation grommets and/or insulating sleeves, which extend from the corresponding coil unit (28, 30) to the application area (34), wherein the electrodes (24, 26, 72) run through the insulation devices (50), in particular wherein at least one of the insulation devices (50) is provided for each of the electrodes (24, 26, 72) on each of the coil units (28, 30).

12. Application device according to Claim 11, **characterised in that** the insulation devices (50) are affixed to the damping device (48) in a vibration-damping manner.

13. Application device according to one of the preceding claims, **characterised in that** a low voltage is applied to at least one of the electrodes (24, 26, 72), in particular in addition to the high voltage.

14. Casting unit having a slot die (18), a chill roll (20) and an application device (22) according to one of the preceding claims, in particular wherein the chill roll (20) is earthed.

15. Stretching system for producing a film, in particular a transverse, longitudinal and/or simultaneous stretching system, having a furnace (14) and a casting unit (12) according to Claim 14.

## Revendications

1. Dispositif d'application électrostatique d'un film (16) sur un cylindre de refroidissement (20), comprenant une première unité de bobinage (28), une deuxième unité de bobinage (30), une zone d'application (34) située entre les unités de bobinage (28, 30), une source de haute tension (32) et au moins deux électrodes (24, 26) ; et dans lequel
au moins la première (24) des au moins deux électrodes (24, 26) est en forme de ruban,
les électrodes (24, 26) s'étendent dans la zone d'application (34), depuis la première unité de bobinage (28) jusqu'à la deuxième unité de bobinage (30), et
les deux électrodes (24, 26) sont alimentées en haute tension par la source de haute tension (32) ;
une, plusieurs ou toutes les électrodes (24, 26, 72) étant mobiles dans leur sens longitudinal entre la première unité de bobinage (28) et la deuxième unité de bobinage (30).

2. Dispositif d'application selon la revendication 1, **caractérisé en ce que** la deuxième électrode (26) des au moins deux électrodes (24, 26) est en forme de ruban ou de fil, et consiste plus particulièrement en un fil.

3. Dispositif d'application selon la revendication 1 ou 2, **caractérisé en ce qu'**il est prévu une troisième électrode (72), ladite troisième électrode (72) étant en forme de ruban ou de fil, et consistant plus particulièrement en un fil.

4. Dispositif d'application selon l'une des revendications précédentes, **caractérisé en ce que** les électrodes (24, 26, 72) sont parallèles entre elles et/ou présentent chacune deux surfaces latérales, les électrodes (24, 26, 72) étant tournées les unes vers les autres par leurs surfaces latérales.

5. Dispositif d'application selon l'une des revendications précédentes, **caractérisé en ce que** les électrodes (24, 26, 72) présentent, dans la zone d'application (34), un écart de 3 mm à 15 mm, notamment de 5 mm à 10 mm, entre elles.

6. Dispositif d'application selon l'une des revendications précédentes, **caractérisé en ce que** les électrodes (24, 26, 72) ont la même largeur ou des largeurs différentes et/ou **en ce que** la largeur des électrodes (24, 26, 72) est comprise entre 3 mm et 15 mm, en étant notamment supérieure ou égale à 4 mm et inférieure à 13 mm, et/ou
**caractérisé en ce que** les électrodes (24, 26, 72) sont décalées ou disposées de niveau dans le sens de leur largeur.

7. Dispositif d'application selon l'une des revendications précédentes, **caractérisé en ce qu'**il est prévu au moins une bobine rotative (38) dans la première et dans la deuxième unité de bobinage (28, 30), sur laquelle une, plusieurs ou toutes les électrodes (24, 26, 72) sont partiellement enroulées.

8. Dispositif d'application selon l'une des revendications précédentes, **caractérisé en ce qu'**il est prévu un dispositif d'apport de tension (40) dans au moins une des unités de bobinage (28, 30), notamment dans les deux unités de bobinage (28, 30), lequel relie électriquement les électrodes (24, 26, 72) à l'au moins une source de haute tension (32), ledit dispositif d'apport de tension (40) présentant notamment un galet (52) sur lequel passe la première électrode (24), et/ou ledit dispositif d'apport de tension (40) présentant un guide arqué (54) sur lequel passent la deuxième électrode (26) et/ou la troisième électrode (72).

9. Dispositif d'application selon l'une des revendications précédentes, **caractérisé en ce que** la première unité de bobinage (28) et/ou la deuxième unité de bobinage (30) présentent un dispositif amortisseur (48) conçu pour amortir les vibrations des électrodes (24, 26) dans la zone d'application (34).

10. Dispositif d'application selon la revendication 9, **caractérisé en ce que** le dispositif amortisseur (48) présente un cylindre amortisseur (66) dont l'axe de rotation (R1) est perpendiculaire au sens longitudinal et au sens de la largeur des électrodes (24, 26), ledit cylindre amortisseur (66) étant monté mobile dans le sens de la largeur et reposant sur un bord de chacune des électrodes (24, 26, 72), notamment sur le bord détourné du cylindre de refroidissement, et ledit dispositif amortisseur (48) présentant notamment deux cylindres amortisseurs (66) dont les axes de rotation (R2) sont perpendiculaires au sens longitudinal et parallèles au sens de la largeur des électrodes (24, 26), chacune des électrodes (24, 26, 72) étant au contact de l'un des cylindres amortisseurs (66).

11. Dispositif d'application selon l'une des revendications précédentes, **caractérisé en ce que** le dispositif d'application (22) présente plusieurs dispositifs isolants (50), notamment des tubes isolants, des manchons isolants et/ou des douilles isolantes, qui s'étendent depuis l'unité de bobinage (28, 30) associée jusqu'à la zone d'application (34), lesdites électrodes (24, 26, 72) traversant lesdits dispositifs isolants (50), au moins un des dispositifs isolants (50) étant notamment prévu pour chacune des électrodes (24, 26, 72) sur chacune des unités de bobinage (28, 30).

12. Dispositif d'application selon la revendication 11, **caractérisé en ce que** les dispositifs isolants (50) sont fixés au dispositif amortisseur (48) d'une manière permettant d'amortir les vibrations.

13. Dispositif d'application selon l'une des revendications précédentes, **caractérisé en ce qu'**au moins une des électrodes (24, 26, 72) est alimentée en basse tension, notamment en sus de l'alimentation en haute tension.

14. Unité à cylindre de refroidissement comprenant une buse à fente large (18), un cylindre de refroidissement (20) et un dispositif d'application (22) selon l'une des revendications précédentes, ledit cylindre de refroidissement (20) étant notamment mis à la terre.

15. Installation d'étirage pour la production d'un film, notamment installation d'étirage transversal, longitudinal et/ou simultané, dotée d'un four (14) et d'une unité à cylindre de refroidissement (12) selon la revendication 14.
